# FASCICULE DE BREVET EUROPEEN

(11) **EP 0 881 397 B1**
(45) Date de publication et mention de la délivrance du brevet: **10.04.2002**
(21) Numéro de dépôt: 98401284.9
(22) Date de dépôt: 28.05.1998
(51) Int. Cl.: F16B 2/14, F16B 17/00

(54) **Assemblage de deux pièces emmanchées**
Zusammenbau von zwei miteinander langgestreckten Elementen
Assembly of two elongated elements

(30) Priorité: 29.05.1997 FR 9706629
(43) Date de publication de la demande: 02.12.1998
(73) Titulaire: NORINCO, F-60149 Saint-Crepin-Ibouvillers (FR)
(72) Inventeur: Fumalle, Christian, 95430 Butry sur Oise (FR)
(74) Mandataire: Bentz, Jean-Paul

(56) Documents cités:
- EP-A- 0 417 654
- GB-A- 2 024 925
- US-A- 3 743 334

## Description

La présente invention a essentiellement pour objet un assemblage de deux pièces emmanchées l'une dans l'autre.

Il est connu depuis fort longtemps en mécanique d'emmancher une pièce mâle dans une pièce femelle et de réaliser l'assemblage des deux pièces emmanchées à l'aide de moyens qui peuvent être variés, au niveau de la zone d'emmanchement des deux pièces, comme décrit dans EP-A-417 654.

Toutefois les moyens pour réaliser l'assemblage sont bien souvent défaillants à la longue et, d'une manière générale, il n'est pas possible d'obtenir un assemblage réellement positif des deux pièces mâle et femelle sur une très longue période de temps, surtout lorsque l'assemblage est soumis à des sollicitations diverses.

Aussi, la présente invention a pour but de remédier à ces inconvénients en proposant un assemblage de deux pièces emmanchées qui remédie avantageusement à tout risque de désassemblage des deux pièces et cela même après une très longue période de temps ou lorsque l'assemblage est soumis à des sollicitations ou vibrations d'importance et de fréquence diverses.

A cet effet, l'invention a pour objet un assemblage de deux pièces emmanchées respectivement mâle et femelle, dont la pièce mâle et la pièce femelle comportent chacune au moins une surface portant des stries et les deux surfaces sont en regard l'une de l'autre, les stries d'une surface formant un angle avec celles de l'autre surface, tandis qu'un élément de blocage par pression de la surface striée de la pièce mâle contre la surface striée dans la pièce femelle est inséré dans ladite pièce femelle.

Suivant une autre caractéristique de cet assemblage, les stries d'une surface sont sensiblement orthogonales aux stries de l'autre surface.

Suivant un mode de réalisation, les stries portées par la surface de la pièce mâle s'étendent suivant la direction longitudinale de cette pièce, tandis que les stries portées par la surface de la pièce femelle sont orthogonales à l'axe de cette pièce.

Suivant un autre mode de réalisation, la pièce mâle présente en section transversale la forme d'un trapèze isocèle dont les deux côtés opposés forment chacun une surface comportant des stries susceptibles de coopérer avec des stries orthogonales prévues sur au moins deux surfaces opposées complémentaires dans la pièce femelle.

Selon encore un autre mode de réalisation, la grande base du trapèze isocèle précité comporte elle aussi des stries coopérant avec l'élément de blocage qui comporte lui aussi des stries qui sont orthogonales aux stries citées en premier lieu.

Suivant une autre caractéristique de l'assemblage précité, l'élément de blocage est sollicité par une vis solidaire de la pièce femelle transversalement à son axe pour comprimer ledit élément de blocage et la pièce mâle contre la pièce femelle.

L'assemblage selon cette invention est encore caractérisé en ce que la pièce mâle et la pièce femelle sont obtenues par moulage de fonderie, tandis que l'élément de blocage précité présente la forme d'une clavette.

Suivant un exemple d'application, la pièce mâle précitée forme un ergot solidaire du dessous d'un tampon de regard tandis que la pièce femelle porte un crochet susceptible de coopérer avec un cadre recevant ledit tampon.

Mais d'autres caractéristiques et avantages de l'invention apparaîtront mieux dans la description détaillée qui suit et se réfère aux dessins annexés, donnés uniquement à titre d'exemple, et dans lesquels :
La figure 1 est une vue en perspective, avant montage, des pièces formant l'assemblage de cette invention, suivant un premier mode de réalisation.
La figure 2 est une vue en élévation et coupe de la pièce femelle suivant la ligne II-II de la figure 4, des deux pièces en cours d'assemblage.
La figure 3 est une vue similaire à la figure 2, mais montrant les pièces en position d'assemblage final.
La figure 4 est une vue de dessus de l'assemblage suivant la flèche IV de la figure 3.
La figure 5 est une vue en perspective, avec arrachement de la pièce femelle, d'un deuxième mode de réalisation d'assemblage conforme à cette invention.
La figure 6 est une vue en coupe verticale des pièces en cours d'assemblage.
La figure 7 est une vue en plan de dessus suivant la flèche VII de la figure 6.
La figure 8 est une vue en coupe axiale, suivant la ligne VIII-VIII de la figure 9 d'un troisième mode de réalisation d'assemblage selon cette invention, l'assemblage étant ici représenté en cours d'exécution.
La figure 9 est une vue en plan de dessus suivant la flèche IX de la figure 8.
La figure 10 est une vue similaire à la figure 8 mais montrant les pièces en position finale d'assemblage.
La figure 11 est une vue de dessus de cet assemblage suivant la flèche XI de la figure 10.
La figure 12 est une vue partielle et en coupe d'un tampon reçu dans un cadre et solidarisé de ce cadre au moyen d'un assemblage selon cette invention.

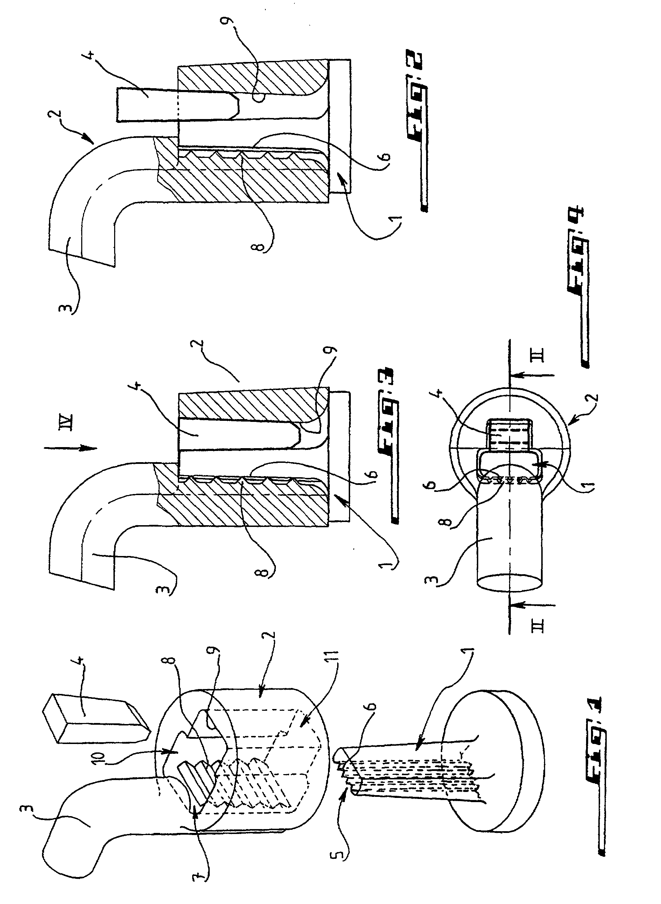

On voit notamment sur les figures 1, 5 et 10 qu'un assemblage conforme à cette invention se compose de deux pièces emmanchées, à savoir une pièce mâle 1 emmanchée sur une pièce femelle 2 présentant la forme d'un manchon qui, suivant l'exemple représenté comporte une partie 3 en forme de crochet, étant bien entendu qu'une telle partie n'est nullement obligatoire et pourrait être remplacée par tout autre moyen puisque l'assemblage de cette invention peut avoir une utilisation quelconque.

L'idée de base de cette invention est que la pièce mâle 1 et la pièce femelle 2 comportent chacune au moins une surface portant des stries, les stries d'une surface formant un certain angle avec celles de l'autre surface de manière que lorsque les deux surfaces sont en regard l'une de l'autre après emmanchement, l'insertion d'un élément 4 dans la pièce femelle 2 provoque le blocage par pression de la surface striée de la pièce mâle 1 contre la surface striée dans la pièce femelle 2. Autrement dit, il y aura en quelque sorte une interpénétration des stries qui réaliseront un assemblage positif et indémanchable des deux pièces mâle et femelle.

Dans la description qui suit des diverses réalisations d'assemblage conformes à cette invention, les stries d'une surface sont sensiblement orthogonales aux stries de l'autre surface en regard. Mais, sans sortir du cadre de l'invention, les stries d'une surface pourraient parfaitement ne pas être perpendiculaires à celles de l'autre surface, c'est-à-dire s'étendre suivant une direction différente de celle des stries de l'autre surface pour former avec elles un angle quelconque et différent de 90°.

Dans le mode de réalisation représenté sur les figures 1 à 4, on voit que la pièce mâle 1 présente sensiblement la forme d'un parallélèpipède rectangle dont une surface 5 porte des stries sensiblement parallèles 6. Les stries 6 s'étendent suivant la direction longitudinale de la pièce mâle 1.

La pièce femelle 2 comporte intérieurement une surface 7 portant des stries 8 qui sont orthogonales à l'axe de ladite pièce femelle 2, c'est-à-dire aux stries 5 de la pièce mâle 1 lorsque cette dernière est insérée dans la pièce femelle 2, les surfaces 7 de la pièce femelle 2 et 5 de la pièce mâle 1 venant ainsi en regard l'une de l'autre.

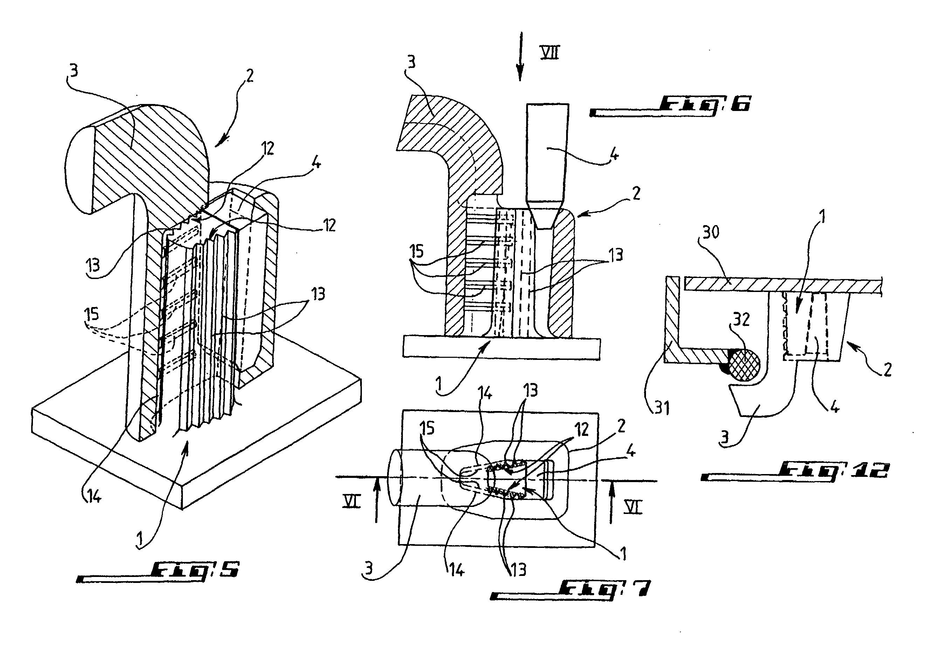

Ceci est bien visible sur la figure 2 où la pièce mâle 1 a été insérée dans la pièce femelle 2 et où l'élément de blocage 4 présentant la forme d'une clavette est montré en début d'insertion dans la pièce femelle 2 entre la pièce mâle 1 et une paroi interne 9 de la pièce femelle.

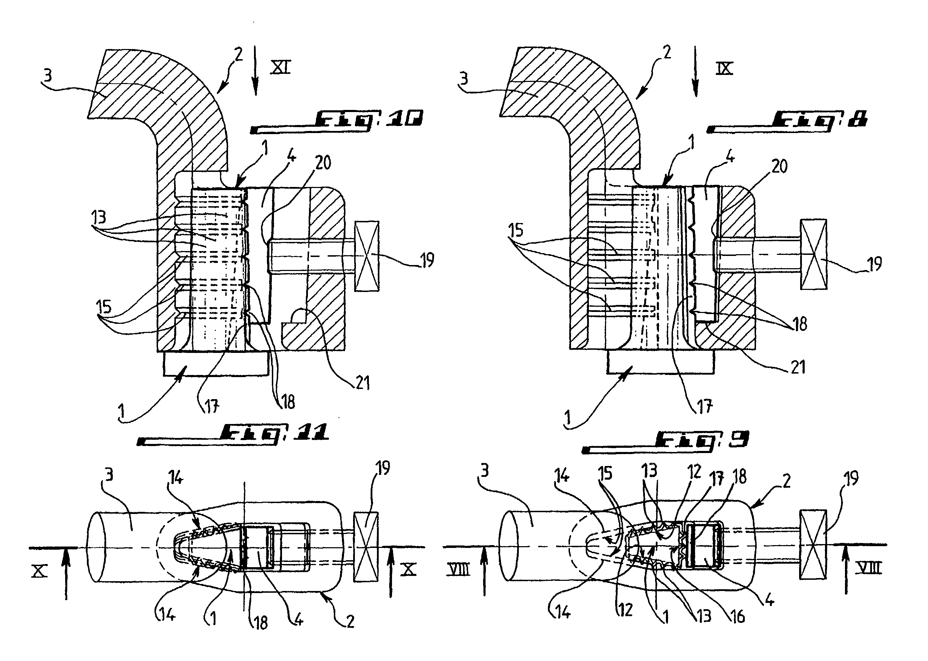

Ainsi, après avoir complètement enfoncé l'élément 4, comme on le voit bien sur les figures 3 et 4, il y aura coopération et inter-pénétration des stries 6 et 8 appartenant respectivement à la pièce mâle 1 et à la pièce femelle 2, de sorte que les deux pièces emmanchées formeront un assemblage extrêmement solide et susceptible de résister, même à la longue, à d'importantes sollicitations ou vibrations.

On voit sur la figure 1 que la paroi interne de la pièce femelle 2 forme deux logements communiquant, à savoir un logement 10 recevant la pièce mâle 1 et comportant la surface 7 avec ses stries 8, et un logement 11 recevant l'élément de blocage 4. Toutefois, une telle structure de pièce femelle 2 à deux logements communiquant 10, 11 pourrait parfaitement être autre, sans sortir du cadre de la présente invention.

Dans le mode de réalisation représenté sur les figures 5, 6 et 7, on voit que la pièce mâle 1 présente en section transversale la forme d'un trapèze isocèle. Les deux côtés opposés du trapèze forment chacun une surface 12 comportant des stries 13 qui, comme c'était le cas dans la réalisation de la figure 1, s'étendent suivant la direction longitudinale de la pièce mâle 1.

La pièce femelle 2 comporte intérieurement deux surfaces opposées 14 qui sont en quelque sorte complémentaires des surfaces 12 de la pièce mâle 1 et qui comportent des stries 15 orthogonales aux stries 13 de la pièce mâle 1, comme on le voit bien sur les figures 5 et 6.

Ainsi, comme décrit précédemment, pour réaliser l'assemblage emmanché des pièces mâle 1 et femelle 2, on enfoncera à force dans la pièce femelle 2 l'élément de blocage 4, comme cela est bien visible sur les figures 6 et 7. De cette manière, la pièce mâle 1 en forme de trapèze isocèle se déplacera vers la gauche des figures 6 et 7, pour bloquer par pression la pièce mâle 1 dans la pièce femelle 2, puisque les stries 13 de la pièce mâle 1 s'interpénètreront avec ou encore viendront mordre les stries orthogonales 15 dans la pièce femelle 2.

Dans la variante d'assemblage visible sur les figures 8 à 11, on retrouve, comme dans le mode de réalisation précédemment décrit, un élément mâle 1 présentant une forme de trapèze en section transversale et dont les côtés opposés forment deux surfaces 12 portant des stries 13. Egalement, la pièce femelle 2 comporte intérieurement deux surfaces opposées 14 complémentaires des surfaces 12 de la pièce mâle 1 et portant des stries 15 orthogonales aux stries 13.

Mais ici, comme on le voit bien sur la figure 9, la grande base 16 du trapèze isocèle que forme la pièce mâle 1 est elle aussi munie de stries 17 qui, comme les stries 13 s'étendent suivant la direction longitudinale de la pièce mâle 1.

Quant à l'élément de blocage 4, il comporte lui aussi sur sa face en regard de la pièce mâle 1 des stries 18 qui sont orthogonales aux stries 17, de sorte que les stries 17 et 18 pourront coopérer par pression de l'élément 4 sur la pièce mâle 1.

En outre, la pièce femelle 2 est transversalement munie d'une vis 19 susceptible d'agir sur l'élément de blocage 4 en pénétrant dans une rainure 20 prévue sur cet élément.

L'assemblage des pièces mâle 1 et 2 s'effectue de la façon suivante.

Comme on le voit sur les figures 8 et 9, la pièce mâle 1 en forme de trapèze est introduite dans la pièce femelle 2, de façon que les surfaces striées 12 de la pièce mâle 1 soient en correspondance avec les surfaces striées 14 à l'intérieur de la pièce femelle 2. Puis l'élément de blocage 4 portant les stries 18 est introduit dans la pièce femelle 2 jusqu'à venir en butée sur un épaulement 21.

La vis 19 est alors vissée et serrée pour, comme on le voit sur les figures 10 et 11 comprimer l'élément 4 contre la pièce mâle 1 qui à son tour est comprimée dans la pièce femelle 2.

C'est dire que, d'une part les stries 18 de l'élément 4 coopéreront avec les stries orthogonales 17 de la pièce mâle 1, et que d'autre part les stries 13 de ladite pièce mâle 1 coopéreront avec les stries orthogonales 15 de la pièce 2. Une telle imbrication des stries procurera naturellement un assemblage extrêmement solide et fiable dans le temps.

De plus un tel assemblage présente l'avantage d'être démontable, ce qui n'est pas le cas, ou très difficilement le cas, avec les deux assemblages représentés respectivement sur les figures 1 à 4 et 5 à 7.

On se reportera maintenant à la figure 12 qui illustre un exemple d'application de l'assemblage qui vient d'être décrit et qui est ici l'assemblage visible sur la figure 3 ou la figure 5, lequel est représenté schématiquement sur la figure 12.

On voit sur cette figure un tampon ou couvercle 30 pour regard de chaussée par exemple, lequel tampon est reçu dans un cadre 31 comportant un rebord formant une butée 32.

Sur le dessous du tampon 30 est fixée, par soudage par exemple, la pièce mâle 1 précédemment décrite et formant en quelque sorte un ergot.

Sur cette pièce mâle 1 est emmanchée la pièce femelle 2 comportant un crochet 3 susceptible de coopérer avec la butée 32 pour verrouiller le tampon 30 sur le cadre 31.

Enfin, on voit en 4 l'élément de blocage ou clavette permettant l'assemblage emmanché de la pièce femelle 2 sur la pièce mâle ou ergot 1.

Ainsi, grâce à l'invention, on pourra notamment fixer sur un ergot sous un tampon, à l'endroit où on le désire, un crochet permettant de solidariser ledit tampon d'un cadre. Mais l'assemblage de l'invention peut revêtir une multitude d'autres applications.

On observera encore que la pièce mâle 1 et la pièce femelle 2 de l'invention sont commodément obtenues par moulage de fonderie.

Quant à l'élément de blocage 4, il présente la forme générale d'une clavette avec une extrémité qui peut être effilée pour faciliter son insertion.

Bien entendu, l'invention n'est nullement limitée aux modes de réalisation décrits et illustrés qui n'ont été donnés qu'à titre d'exemple.

C'est ainsi que les stries sur la pièce mâle d'une part et les stries sur la pièce femelle d'autre part peuvent s'étendre suivant des directions différentes de manière à former un angle de 90° ou autre.

## Revendications

1. Assemblage de deux pièces emmanchées respectivement mâle et femelle, la pièce mâle (1) et la pièce femelle (2) comportant chacune au moins une surface (5, 7, 12, 14) portant des stries (6, 8, 13, 15) et les deux surfaces sont en regard l'une de l'autres, tandis qu'un élément (4) de blocage par pression de la surface striée de la pièce mâle (1) contre la surface striée dans la pièce femelle (2)est inséré dans ladite pièce femelle (2), **caractérisé en ce que** les stries (6, 13) d'une surface (5, 12) forment un angle avec celles (8, 15) de l'autre surface (7, 14).

2. Assemblage selon la revendication 1, **caractérisé en ce que** les stries (6,13) d'une surface (5,12) sont sensiblement orthogonales aux stries (8,15) de l'autre surface (7,14).

3. Assemblage selon la revendication 1 ou 2, **caractérisé en ce que** les stries (6) portées par la surface (5) de la pièce mâle (1) s'étendent suivant la direction longitudinale de cette pièce, tandis que les stries (8) portées par la surface (7) de la pièce femelle (2) sont orthogonales à l'axe de cette pièce.

4. Assemblage selon la revendication 2 ou 3, **caractérisé en ce que** la pièce mâle (1) présente en section transversale le forme d'un trapèze isocèle dont les deux côtés opposés forment chacun une surface (12) comportant des stries (13) susceptibles de coopérer avec des stries orthogonales (15) prévues sur au moins deux surfaces opposées complémentaires (14) dans la pièce femelle (2).

5. Assemblage selon la revendication 4, **caractérisé en ce que** la grande base (16) du trapèze isocèle précité comporte elle aussi des stries (17) coopérant avec l'élément de blocage (4) qui comporte lui aussi des stries (18) qui sont orthogonales aux stries (17) citées en premier lieu.

6. Assemblage selon la revendication 5, **caractérisé en ce que** l'élément de blocage (4) est sollicité par une vis (19) solidaire de la pièce femelle (2) transversalement à son axe pour comprimer ledit élément de blocage (4) et la pièce mâle (1) dans la pièce femelle (2).

7. Assemblage selon l'une des revendications précédentes, **caractérisé en ce que** la pièce mâle (1) et la pièce femelle. (2) sont obtenues par moulage de fonderie et l'élément de blocage précité (4) présente la forme d'une clavette.

8. Assemblage selon l'une des revendications précédentes, **caractérisé en ce que** la pièce mâle (1) forme un ergot solidaire de dessous d'un tampon de regard (30) et la pièce femelle (2) porte un crochet (3) susceptible de coopérer avec un cadre (31) recevant le tampon (30).

## Patentansprüche

1. Zusammenbau zweier ineinander gesteckter Teile, jeweils eines männlichen und eines weiblichen, wobei das männliche Teil (1) und das weibliche Teil (2) jedes wenigstens eine Rillen (6, 8, 13, 15) tragende Fläche (5, 7, 12, 14) umfassen und die beiden Flächen einander gegenüberliegen, während ein Blockierelement (4) durch Druck der gerillten Fläche des männlichen Teils (1) gegen die gerillte Fläche im weiblichen Teil (2) in besagtes weibliches Teil eingeführt wird, **dadurch gekennzeichnet, dass** die Rillen (6, 13) einer Fläche (5, 12) mit denen (8, 15) der anderen Fläche (7, 14) einen Winkel bilden.

2. Zusammenbau gemäß Anspruch 1, **dadurch gekennzeichnet, dass** die Rillen (6, 13) einer Fläche (5, 12) deutlich orthogonal zu den Rillen (8, 15) der anderen Fläche (7, 14) sind.

3. Zusammenbau gemäß Anspruch 1 oder 2, **dadurch gekennzeichnet, dass** die von der Fläche (5) des männlichen Teils (1) getragenen Rillen (6) sich gemäß der Längsrichtung dieses Teils erstrecken, während die von der Fläche (7) des weiblichen Teils (2) getragenen Rillen (8) orthogonal zur Achse dieses Teils sind.

4. Zusammenbau gemäß Anspruch 2 oder 3, **dadurch gekennzeichnet, dass** das männliche Teil (1) im querverlaufenden Abschnitt die Form eines gleichschenkligen Trapezes aufweist, deren beide gegenüberliegende Seiten jede eine Fläche (12) bilden, die Rillen (13) umfasst, die geeignet sind, mit den orthogonalen Rillen (15) zusammenzuwirken, die auf wenigstens zwei im weiblichen Teil (2) komplementären, einander gegenüberliegenden Flächen (14) vorgesehen sind.

5. Zusammenbau gemäß Anspruch 4, **dadurch gekennzeichnet, dass** die große Basis (16) des vorgenannten gleichschenkligen Trapezes auch Rillen (17) umfasst, die mit dem Blockierelement (4) zusammenwirken, das ebenfalls Rillen (18) umfasst, die orthogonal zu den anfangs genannten Rillen (17) sind.

6. Zusammenbau gemäß Anspruch 5, **dadurch gekennzeichnet, dass** das Blockierelement (4) durch eine Schraube (19) angesprochen wird, die querverlaufend mit seiner Achse mit dem weiblichen Teil (2) fest verbunden ist, um besagtes Blockierelement (4) und das männliche Teil (1) im weiblichen Teil (2) zu komprimieren.

7. Zusammenbau gemäß einem der vorgenannten Ansprüche, **dadurch gekennzeichnet, dass** das männliche Teil (1) und das weibliche Teil (2) durch Abformen durch Gießen erhalten werden und das vorgenannte Blockierelement (4) die Form eines Keils aufweist.

8. Zusammenbau gemäß einem der vorgenannten Ansprüche, **dadurch gekennzeichnet, dass** das männliche Teil (1) einen Vorsprung bildet, der fest mit der Unterseite eines Lochdeckels (30) verbunden ist, und das weibliche Teil (2) einen Haken (3) trägt, der geeignet ist, mit einem den Deckel (30) aufnehmenden Rahmen (31) zusammenzuwirken.

## Claims

1. Assembly of two interlocked elements, male and female, respectively, the male element (1) and the female element (2), each comprising at least one surface (5, 7, 12, 14) having serrations (6, 8, 13, 15) thereon and the two surfaces facing each other, while a member (4) for pressure locking the serrated surface of the male element (1) against the serrated surface in the female element (2) is inserted into said female element (2), **characterized in that** the serrations (6, 13) of one surface (5, 12) form an angle with those (8, 15) of the other surface (7, 14).

2. Assembly according to claim 1, **characterized in that** the serrations (6, 13) of one surface (5, 12) are substantially orthogonal to the serrations (8, 15) of the other surface (7, 14).

3. Assembly according to claim 1 or 2, **characterized in that** the serrations (6) carried by the surface (5) of the male element (1) are extended according to the longitudinal direction of this element, while the serrations (8) carried by the surface (7) of the female element (2) are orthogonal to axis of this element.

4. Assembly according to claim 2 or 3, **characterized in that** the male element (1) has a cross section in the shape of an isosceles trapezium, the two opposite sides of which each forms a surface (12) comprising serrations (13) able to cooperate with orthogonal serrations (15) provided on at least two complementary opposite surfaces (14) in the female element (2).

5. Assemby according to claim 4, **characterized in that** the greater base (16) of the above mentioned isoceles trapezium also comprises a set of serrations (17) cooperating with the locking member (4) which also comprises a set of serrations (18) which are orthogonal to the first mentioned serrations (17).

6. Assembly according to claim 5, **characterized in that** the locking member (4) is urged by a screw (19) rigidly connected with the female element (2) transversely to its axis for compressing said locking member (4) and the male element (1) in the female element (2).

7. Assembly according to one of the preceeding claims, **characterized in that** the male element (1) and the female element (2) are obtained by cast moulding, and the above mentioned locking element (4) is key shaped.

8. Assembly according to one ot the preceeding claims, **characterized in that** the male element (1) carries a snug rigidly connected with the underside of a manhole cover (30) and the female element (2) carries a hook (3) able to cooperate with a frame (31) which receives the cover (30).
